(19)

**Europäisches Patentamt**

**European Patent Office**

**Office européen des brevets**

(11) **EP 3 799 651 B1**

(12) **EUROPÄISCHE PATENTSCHRIFT**

(45) Veröffentlichungstag und Bekanntmachung des Hinweises auf die Patenterteilung:
**23.07.2025 Patentblatt 2025/30**

(21) Anmeldenummer: **20730181.3**

(22) Anmeldetag: **29.04.2020**

(51) Internationale Patentklassifikation (IPC):
**G06T 7/514** (2017.01) **G06T 7/521** (2017.01)

(52) Gemeinsame Patentklassifikation (CPC):
**G06T 7/521; G06T 7/514;** G06T 2207/10152; G06T 2207/30108

(86) Internationale Anmeldenummer:
**PCT/DE2020/200029**

(87) Internationale Veröffentlichungsnummer:
**WO 2020/249166 (17.12.2020 Gazette 2020/51)**

(54) **VERFAHREN UND SYSTEM ZUM OPTISCHEN VERMESSEN EINES OBJEKTS MIT SPIEGELNDER UND/ODER TEILSPIEGELNDER OBERFLÄCHE SOWIE ENTSPRECHENDE MESSANORDNUNG**

METHOD AND SYSTEM FOR OPTICALLY MEASURING AN OBJECT HAVING A REFLECTIVE AND/OR PARTIALLY REFLECTIVE SURFACE AND CORRESPONDING MEASURING ARRANGEMENT

PROCÉDÉ ET SYSTÈME POUR LA MESURE OPTIQUE D'UN OBJET AYANT DES SURFACES RÉFLÉCHISSANTES ET/OU PARTIELLEMENT RÉFLÉCHISSANTES AINSI QUE DISPOSITIF DE MESURE CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.06.2019 DE 102019208474**

(43) Veröffentlichungstag der Anmeldung:
**07.04.2021 Patentblatt 2021/14**

(73) Patentinhaber: **MICRO-EPSILON Messtechnik GmbH & Co. KG**
**94496 Ortenburg (DE)**

(72) Erfinder:
• **KICKINGEREDER, Reiner**
**94496 Ortenburg (DE)**
• **ZIMMERMANN, Alexander**
**94527 Aholming (DE)**
• **FABER, Christian**
**84030 Ergolding (DE)**
• **LIANG, Hanning**
**91054 Erlangen (DE)**

(74) Vertreter: **Ullrich & Naumann PartG mbB**
**Schneidmühlstrasse 21**
**69115 Heidelberg (DE)**

(56) Entgegenhaltungen:
**WO-A1-2016/209412 US-A1- 2010 214 406**

• **TARINI M ET AL: "3D acquisition of mirroring objects using striped patterns", GRAPHICAL MODELS, ELSEVIER, SAN DIEGO, CA, US, vol. 67, no. 4, 1 July 2005 (2005-07-01), pages 233 - 259, XP027474612, ISSN: 1524-0703, [retrieved on 20050523], DOI: 10.1016/J.GMOD.2004.11.002**
• **SILVIO SAVARESE ET AL: "Local Shape from Mirror Reflections", INTERNATIONAL JOURNAL OF COMPUTER VISION, KLUWER ACADEMIC PUBLISHERS, BO, vol. 64, no. 1, 1 August 2005 (2005-08-01), pages 31 - 67, XP019216474, ISSN: 1573-1405, DOI: 10.1007/S11263-005-1086-X**
• **SALVI J ET AL: "Pattern codification strategies in structured light systems", PATTERN RECOGNITION, ELSEVIER, GB, vol. 37, no. 4, 1 April 2004 (2004-04-01), pages 827 - 849, XP004491495, ISSN: 0031-3203, DOI: 10.1016/ J.PATCOG.2003.10.002**

• STEFAN BRUNO WERLING ET AL: "Deflektometrie zur automatischen Sichtprüfung und Rekonstruktion spiegelnder Oberflächen", DEFLEKTOMETRIE ZUR AUTOMATISCHEN SICHTPR?FUNG UND REKONSTRUKTION SPIEGELNDER OBERFL?CHEN, 1 January 2011 (2011-01-01), Karlsruhe, Deutschland, XP055720294, ISBN: 978-3-86644-687-8, Retrieved from the Internet <URL:https://www.ksp.kit.edu/download/1000023287> [retrieved on 20200805]

• STEFAN BRUNO WERLING ET AL: "Deflektometrie zur automatischen Sichtprüfung und Rekonstruktion spiegelnder Oberflächen", DEFLEKTOMETRIE ZUR AUTOMATISCHEN SICHTPR?FUNG UND REKONSTRUKTION SPIEGELNDER OBERFL?CHEN,

**Beschreibung**

Die Erfindung betrifft ein Verfahren und ein System zum optischen Vermessen eines Objekts mit spiegelnder und/oder teilspiegelnder Oberfläche.

Derartige Verfahren, Systeme und Messanordnungen werden insbesondere für ein vollflächiges optisches Vermessen der Oberflächentopographie von Objekten mit spiegelnder oder teilspiegelnder Freiform-Oberfläche genutzt. Anwendungen ergeben sich in der Automobilindustrie (beispielsweise bei lackierten Karosserieteilen), in der optischen Industrie (beispielsweise bei der Vermessung von Linsen und Spiegeln) oder auch im Consumer-Bereich (beispielsweise bei der Vermessung von Mobiltelefon- und Tablet-Displays), um lediglich einige Einsatzszenarien zu nennen.

Bei derartigen Messungen ist die phasenmessende Deflektometrie ein etabliertes und häufig eingesetztes Verfahren. Die Grundzüge dieser Deflektometrie sind in der DE 199 44 354 A1 beschrieben. Hierbei wird auf einem kalibrierten Schirm ein in der Regel sinusförmiges Streifenmuster dargestellt und mit einer oder mehreren kalibrierten Kamera(s) über die spiegelnde Oberfläche des zu vermessenden Objekts beobachtet. Durch geeignete Phasenauswertungen in mehreren Richtungen kann für jedes Kamerapixel auf die Koordinaten des beobachteten Musterpunkts in der Schirmebene zurückgeschlossen werden. Mittels Lichtstrahlverfolgung des Kamera-Sichtstrahls zum beobachteten Schirmpunkt kann unter gewissen Bedingungen auf die Oberflächennormale und nach numerischer Integration auch auf die Form des beobachteten Objekts geschlossen werden.

Ein bekanntes Problem bei diesem Verfahren ist die sogenannte Höhen-Mehrdeutigkeit: Da in jedem Kamerapixel nur Information über den Ort des beobachteten Schirmpunkts, nicht aber über dessen Abstrahlrichtung vorliegt, kann die Oberflächennormale nur bei bekannter Lage ("Höhe") des Objekts eindeutig bestimmt werden. Für unterschiedliche Höhenannahmen ergeben sich entsprechend unterschiedliche Oberflächennormalen. Diese oft auch als "Regularisierungsproblem oder Höhenproblem der Deflektometrie" bezeichnete Mehrdeutigkeit kann durch verschiedene Ansätze gelöst werden, welche jedoch alle spezifische Nachteile mit sich bringen.

Bei einem Ansatz, der in T. Bonfort et al. "General Specular Surface Triangulation", Proceedings of the 7th Asian Conference on Computer Vision - Volume Part I, 872-882, Berlin Heidelberg: Springer-Verlag (2006) beschrieben ist, wird die unbekannte Abstrahlrichtung durch eine zweite Messung mit einer zu der Schirm-Ebene senkrecht verschobenen Schirmposition bestimmt. Dies erfordert jedoch eine aufwendige Mechanik zur Schirmverschiebung sowie eine anspruchsvolle Kalibrierung des Aufbaus in beiden Schirmpositionen. Weiterhin verlängert dieser Ansatz die Messzeit.

Bei einem anderen Ansatz kann die unbekannte Objektlage durch eine AbsolutMessung in einem Punkt mit einem zusätzlichen, unabhängigen Messverfahren bestimmt werden. Diese Messung kann optisch (beispielsweise mit einem Triangulationssensor) oder taktil erfolgen. Die unbekannten Höhen anderer Punkte der Oberfläche können ausgehend von diesem einen vermessenen Oberflächenpunkt durch iterative Integration der unter der jeweils aktuellen Höhenannahme berechneten Oberflächennormalen bis zur Selbstkonsistenz bestimmt werden. Ein derartiges Vorgehen ist beispielsweise in E. Slogsnat et al. "Non-stereoscopic Method for Deflectometric Measurement of Reflecting Surfaces", Proc. DGaO 110 A11 (2009) beschrieben. Nachteil dieses Verfahrens ist, dass eine zusätzliche punktförmige Höhenmessung in den Aufbau integriert und entsprechend kalibriert werden muss, was sich ungünstig auf Kosten und Bauraum der Vorrichtung auswirkt.

Speziell für teilspiegelnde Objekte ist in der EP 1 837 623 A1 ein Verfahren bekannt, bei dem die Mehrdeutigkeit durch Kombination deflektometrischer Messung des gerichtet reflektierten Anteils mit einer "Shape-from-Shading"-Auswertung des diffus reflektierten Anteils aufgelöst wird. Dies setzt jedoch zwingend eine ausreichend starke (Teil-) Rauigkeit der Oberfläche zur Generierung des benötigten diffus reflektierten Anteils voraus, welche bei sehr glatten bzw. komplett glänzenden Oberflächen nicht gegeben ist.

Eine weitere Möglichkeit zum Lösen der voranstehend beschriebenen Mehrdeutigkeit besteht darin, jedem Schirmpunkt eine eindeutige Richtung unabhängig von der jeweiligen Objektlage zuzuordnen. Ein derartiges, als richtungscodierte Deflektometrie bekanntes Verfahren ist beispielsweise in der DE 100 14 964 A1 beschrieben. Hierbei ist jedoch zwingend erforderlich, dass der Schirm ins Unendliche abgebildet wird und die Hauptstrahlen zur Beobachtung des Objekts parallel sind. Die hierfür benötigte sehr große Linse zur Abbildung des Schirms sowie die ebenfalls erforderliche bauraum- und kostenintensive telezentrische Beobachtungsoptik haben zur Folge, dass dieser Ansatz für den praktischen Einsatz meist nicht verwendet werden kann - insbesondere bei größeren Bildfeldern und/oder größeren Winkeldynamiken.

In der DE 10 2004 020 419 B3 ist gezeigt, dass die Mehrdeutigkeit auch durch Beobachtung mit einer oder mehreren zusätzlichen Kameras aufgelöst werden kann (sogenannte "Stereo- oder Absolut-Deflektometrie"). Nachteilig sind hierbei jedoch der höhere apparative und kalibrierseitige Aufwand sowie der zusätzlich erforderliche Bauraum. Weiterhin müssen sich für diesen Ansatz die Bildfelder der Kameras ausreichend überlappen. Für eine gute Höhenauflösung wird ebenfalls ein ausreichend großer Winkel zwischen den Beobachtungsrichtungen der beteiligten Kameras benötigt, was entweder einen sehr großen Schirm oder die Verwendung mehrerer getrennter Schirme für jede einzelne Kamera erforderlich macht. In vielen praktischen Anwendungen ist dies nur begrenzt umsetzbar.

Bei Arbeiten mit nur einer Kamera (monokulare Ansicht) kann die in einem Pixel beobachtete Oberflächennormale im Prinzip für jede (unbekannte) potenzielle Objekthöhe berechnet werden. Auf diese Weise ergibt sich ein sogenanntes "Vektorfeld der potenziellen Normalen" im Messvolumen. Unter geeigneten Stetigkeits- und Differenzierbarkeitsannahmen der Objektoberfläche lässt sich zeigen, dass bei gewissen Geometrien des Messaufbaus dieses Vektorfeld nur an der "echten" Objektoberfläche lokal integrierbar ist. Ein Kriterium für die lokale Integrierbarkeit ist die "Frobenius-Bedingung". Derartige Verfahren sind beispielsweise in den Dissertationsschriften von J. Kaminski "Geometrische Rekonstruktion spiegelnder Oberflächen aus deflektometrischen Messdaten", Universität Erlangen-Nürnberg (2008) bzw. von S. B. Werling "Deflektometrie zur automatischen Sichtprüfung und Rekonstruktion spiegelnder Oberflächen", Karlsruher Institut für Technik (2011) offenbart. Obwohl sich auf diese Weise das Höhenproblem auch mit nur einer Kamera-Ansicht theoretisch lösen ließe, ist dieser Ansatz nicht praxistauglich, da für typische Aufbaugeometrien das Vektorfeld der potenziellen Normalen nur äußerst geringfügig und mit sehr niedriger Ortsfrequenz variiert und somit die Abweichung von der lokalen Integrierbarkeit in der Praxis meist nicht messbar ist.

In S. Savarese et al. "Local Shape from Mirror Reflections", International Journal of Computer Vision, 64(1), 31-67 (2005) ist ein Verfahren beschrieben, wie die differentialgeometrischen Parameter der Objektoberfläche in nullter (Lage/Höhe), erster (Neigung/Normale) und zweiter Ordnung (II. Fundamentalform/Krümmung) in diskreten Punkten aus der Abbildung diskreter sich kreuzender Kurven auf dem Schirm bestimmt werden kann. Als Kurven werden hierfür die Kantengeraden eines binären Schachbrettmusters mit dreieckigen oder quadratischen Feldern verwendet. Nachteil dieses Verfahrens ist, dass die Information nur an einzelnen diskreten (räumlich voneinander getrennten) Punkten ausgewertet werden kann, welche durch das Muster fest vorgegeben sind. Darüber hinaus hängt der Ort dieser diskreten Mess- oder Stützpunkte auf der (in Folge geeignet zu interpolierenden) Objektoberfläche von der Form des Objekts selbst ab. WO2016/209412 A1 beschreibt ein System und Verfahren zur Messung der reflektierten optischen Verzerrung in konturierten Panels mit spiegelnden Oberflächen.

Der vorliegenden Erfindung liegt die Aufgabe zugrunde, ein Verfahren und ein System der eingangs genannten Art derart auszugestalten und weiterzubilden, dass ein optisches Vermessen eines Objekts möglichst vollflächig ermöglicht wird, wobei der apparative Aufwand und die Kosten möglichst gering gehalten werden soll.

Erfindungsgemäß wird die voranstehende Aufgabe durch die Merkmale des Anspruchs 1 gelöst.

Hinsichtlich eines Systems ist die voranstehende Aufgabe durch die Merkmale des Anspruchs 12 gelöst.

In erfindungsgemäßer Weise ist zunächst erkannt worden, dass durch Kombination von Aspekten der phasenmessenden Deflektometrie zur Bereitstellung vollflächiger Messdaten und von differentialgeometrischen Ansätzen, die in der vorgenannten Veröffentlichung von S. Savarese et. al "Local Shape from Mirror Reflections" für einzelne diskrete Schnittpunkte sich kreuzender Kurven beschrieben sind, eine Herangehensweise ermöglicht wird, die ein vollflächiges Vermessen eines Objekts mit spiegelnder und/oder teilspiegelnder Oberfläche bei gleichzeitig geringem apparativem Aufwand, insbesondere ohne das Erfordernis der Einführung zusätzlicher Kameras, zusätzlicher Messverfahren oder Verschiebe-Mechaniken, erlaubt. Hierzu wird mittels eines Mustererzeugers ein flächiges Muster erzeugt, das in seinen optischen Eigenschaften variiert ist. Dabei werden die optischen Eigenschaften des Musters derart variiert, dass zumindest in Teilbereichen des Musters eine Vielzahl von verschiedenen Punkten oder eine Vielzahl von verschiedenen Gruppen von Punkten voneinander unterscheidbar sind. Dies bedeutet, dass sich ein Punkt oder eine Gruppe von Punkten zumindest hinsichtlich einer optischen Eigenschaft, beispielsweise der Helligkeit oder der Farbe des Punktes, von anderen Punkten oder anderen Gruppen von Punkten unterscheidet. Auf diese Weise entsteht - ähnlich wie bei der phasenmessenden Deflektometrie - ein Muster, das bei Beobachten mit einer Kamera über eine reflektierende Oberfläche eines Körpers eindeutige Rückschlüsse auf die Position eines beobachteten Punkts oder einer beobachteten Gruppe von Punkten innerhalb des Musters (oder eines Teilbereichs des Musters) ermöglicht.

Zumindest ein Teil dieses Musters wird durch eine reflektierende Oberfläche des Objekts als reflektiertes Muster auf einen Detektor einer Kameraeinheit reflektiert. Der Detektor der Kameraeinheit wandelt das empfangene reflektierte Muster in ein Kamerabild um, das üblicherweise aus einer Vielzahl von in Spalten und Zeilen angeordneten Pixeln besteht. Dieses Kamerabild bildet zusammen mit dem durch den Mustererzeuger generierten Muster einen Ausgangspunkt für die Ermittlung von geometrischen Eigenschaften der reflektierenden Oberfläche des Objekts.

Ein Zusammenhang zwischen Punkten des Kamerabilds und korrespondierenden Punkten des Musters kann mittels einer Korrespondenzfunktion, insbesondere mittels einer ($\mathbb{R}^2 \rightarrow \mathbb{R}^2$)-Korrespondenzfunktion, mathematisch beschrieben werden. Diese Korrespondenzfunktion hängt dabei von geometrischen Eigenschaften der reflektierenden Oberfläche des Objekts ab, d.h. je nach Ausgestaltung der reflektierenden Oberfläche wird das durch den Mustererzeuger dargestellte Muster in unterschiedlicher Weise und an unterschiedlichen Stellen des Detektors der Kameraeinheit abgebildet, was sich in der Korrespondenzfunktion widerspiegelt. So wird beispielsweise bei einem gebogenen Objekt eine gerade Linie des Musters auf eine Kurve abgebildet, deren Krümmung von der Biegung der Oberfläche, der Abstrahlrichtung des reflektierten Musters und weiteren optischen Gegebenheiten abhängt. Wenn also Parameter der Korrespondenzfunktion bekannt sind, kann auf geometrische Eigenschaften der reflektierenden Fläche geschlossen werden. Dabei ist von Vorteil, wenn die Korrespondenzfunktion in einer geeignet zu definierenden lokalen Umgebung jedes einzelnen Messpunkts bestimmt und eineindeutig ist; eine globale Bijektivität auf dem gesamten Messfeld ist nicht erforderlich.

Zum Bestimmen zumindest einer der geometrischen Eigenschaften der reflektierenden Oberfläche des Objekts werden differentialgeometrische Eigenschaften einer durch die Korrespondenzfunktion jeweils lokal gegebenen Transformation genutzt. Dies bedeutet, dass die Korrespondenzfunktion mindestens einmal lokal abgeleitet wird und aus einer Betrachtung der Korrespondenzfunktion und deren Ableitung/en Informationen über die geometrische Beschaffenheit der reflektierenden Fläche gewonnen werden.

Auf Grund des flächigen Musters und der erfindungsgemäßen Ausgestaltung einer Unterscheidbarkeit von Punkten oder Gruppen von Punkten kann ein Punkt eines Kamerabilds einem Punkt des Musters und somit ein flächiger Bereich des Kamerabilds einem (entsprechend verzerrtem) Bereich des Musters auf dem Schirm des Mustererzeugers zugeordnet werden und daraus Parameter der Korrespondenzfunktion und/oder differentialgeometrische Eigenschaften einer durch die Korrespondenzfunktion gegebenen Transformation berechnet werden.

Die Korrespondenzfunktion kann beispielsweise in Form einer Taylor-Entwicklung (oder einer anderen geeigneten Polynom-Approximation) lokal dargestellt werden. Bei lokaler Approximation bis zur zweiten Ordnung kann diese Darstellung z.B. über 10 zu bestimmende Parameter erfolgen - 4 Parameter $a_{11}$, $a_{12}$, $a_{21}$, $a_{22}$ für die Jacobi-Matrix (1. Ordnung) und 6 Parameter $a_{13}$, $a_{14}$, $a_{15}$, $a_{23}$, $a_{24}$, $a_{25}$ für die Hesse-Matrix (2. Ordnung):

$$\begin{pmatrix} x' \\ y' \end{pmatrix} = A \cdot \begin{pmatrix} x \\ y \\ xx \\ xy \\ yy \end{pmatrix} \; mit \; A = \begin{pmatrix} a_{11} & a_{12} & a_{13} & a_{14} & a_{15} \\ a_{21} & a_{22} & a_{23} & a_{24} & a_{25} \end{pmatrix}$$

Die Länge des Sichtstrahls zur Oberfläche kann durch die Lösung eines nicht-linearen Gleichungssystems mit 4 Unbekannten (ein Parameter s für die nullte Ordnung, d.h. die Lage des Objektpunkts im Raum entlang des jeweiligen Sichtstrahls der Kamera, und 3 Parameter a, b, c für die zweite Ordnung, d.h. die zweite Fundamentalform der Objektoberfläche) ermittelt werden. Bei dieser Ausgestaltung liegt das Besondere in der Bestimmung der Koeffizienten der Taylorentwicklung der Korrespondenzfunktion (hier auch als "Transformation" bezeichnet), welche durch Methoden der phasenmessenden Deflektometrie oder anderer geeigneter Musterkodierungen an jedem auszuwertenden Punkt in Form vollflächiger Messdaten in einer geeignet zu definierenden lokalen Umgebung vorliegt und damit die Bestimmung der (beispielsweise 10) Parameter der oben beschriebenen Transformation durch ein überbestimmtes Gleichungssystem in Form eines Least-Square-Fits auf dieser lokalen Umgebung erlaubt.

Prinzipiell kann das erfindungsgemäße Verfahren bei verschiedensten Objekten eingesetzt werden, die eine spiegelnde und/oder teilspiegelnde Oberfläche aufweisen. "Spiegelnde Oberfläche" bedeutet, dass ein unter einem Einfallswinkel einfallender Lichtstrahl mit einem Ausfallswinkel reflektiert wird, der dem Einfallswinkel - jeweils relativ zu der Flächennormalen - entspricht. Diese Reflektion wird auch als "direkte Reflektion" bezeichnet. "Teilspiegelnde Oberfläche" bedeutet, dass zusätzlich zu direkt reflektierten Anteilen Anteile des einfallenden Lichtstrahls auch diffus reflektiert werden. Dies bedeutet, dass der Ausfallswinkel der diffus reflektierten Anteile von den Einfallswinkeln relativ zur Flächennormalen abweicht. Wie groß bei einer teilspiegelnden Oberfläche der Anteil von direkt und diffus reflektierten Strahlenanteilen ist, spielt hierbei eine untergeordnete Rolle. Wichtig ist lediglich, dass die direkt reflektierten Strahlenanteile ausreichend unterscheidbar auf dem Detektor der Kameraeinheit abgebildet werden können. Da der diffus reflektierte Anteil bei dem erfindungsgemäßen Verfahren - im Gegensatz zu EP 1 837 623 A1 - zur Auswertung nicht benötigt wird, sind an diesen keine weiteren Bedingungen zu stellen. Insofern kann dieser auch beliebig schwach ausgeprägt sein.

Auch der Mustererzeuger kann auf verschiedenste Weise realisiert sein. Wesentlich ist, dass das durch den Mustererzeuger erzeugte Muster reproduzierbar erzeugt werden kann, d.h. dass die Darstellung eines Musters zu unterschiedlichen Zeitpunkten unverändert ist. Dies lässt sich durch verschiedene, aus der Praxis bekannte Mustererzeuger realisieren. Lediglich beispielhaft sei auf die Verwendung von TFT (Thin Film Transistor)-, OLED (Organic Light Emitting Diode)-, LCD (Liquid Crystal Display)- oder Plasma-Bildschirmen oder die Projektion des Musters auf eine Leinwand oder Milchglas verwiesen, um lediglich einige nutzbare jedoch nicht auf diese beschränkte Mustererzeuger zu nennen.

Auch die Kameraeinheit kann auf verschiedenste Weise gebildet sein. Wesentlich ist, dass die Kameraeinheit ein auf den Detektor reflektiertes Muster in ein Kamerabild wandeln kann. Dabei bietet es sich an, dass die Abbildungsoptik, der Detektor und weitere Elemente der Kameraeinheit so hochwertig sind, dass das durch den Detektor gewonnene Kamerabild möglichst verzerrungsarm das reflektierte Muster darstellt. Bei weniger hochwertigen Komponenten können diese durch StandardVerfahren der Nahfeld-Photogrammetrie entsprechend kalibriert werden. Zudem bietet es sich insbesondere bei einem Einsatz in Fertigungsanlagen an, dass die Kameraeinheit entsprechend robust und industrietauglich ist.

Sowohl bei dem Mustererzeuger als auch bei der Kameraeinheit bietet es sich an, dass diese jeweils durch kalibrierte Einheiten gebildet sind. Dies bedeutet, dass Verzerrungen, die bei der Erzeugung eines Musters oder der Abbildung eines reflektierten Musters in einem Kamerabild entstehen, oder Änderungen der Farbdarstellung messtechnisch erfasst und für eine Fehlerkorrektur nutzbar sind. Entsprechende Kalibrierungsverfahren sind aus der Praxis hinlänglich bekannt.

Prinzipiell können mit dem erfindungsgemäßen Verfahren verschiedene geometrische Eigenschaften der reflektierenden Fläche ermittelt werden. Wichtig ist dabei, dass sich die geometrische Eigenschaft in dem Kamerabild und der Korrespondenzfunktion zumindest indirekt niederschlägt. Vorzugsweise wird die geometrische Eigenschaft der reflektierenden Oberfläche des Objekts durch eine Höheninformation und/oder eine Neigungsinformation und/oder eine Krümmungsinformation gebildet. Die Höheninformation ist eine (absolute) Position eines Punkts der reflektierenden Oberfläche, an dem ein von dem Muster ausgehender Lichtstrahl zu einem Detektor reflektiert wird. Diese Höheninformation kann dabei insbesondere durch einen Abstand s zwischen dem Punkt der reflektierenden Oberfläche und dem beleuchteten Punkt auf dem Detektor der Kameraeinheit (oder auch dem Kamerazentrum bei Kalibrierung über ein erweitertes Lochkamera-Modell) gegeben sein. Neigungsinformationen lassen sich aus den Höheninformationen durch eine erste Ableitung, Krümmungsinformationen durch eine zweite Ableitung berechnen.

In einer Weiterbildung kann bei kalibrierten Systemen die Neigungsinformation über eine "klassische" deflektometrische Auswertung durch Strahlverfolgung unter Verwendung einer erfindungsgemäß ermittelten Höheninformation s entlang eines durch die Kalibrierung bekannten Sichtstrahls hochgenau bestimmt und somit die Gesamtgenauigkeit der Messung verbessert werden. Hierbei kann ebenfalls die Höheninformation in Folge durch iterative Integration bis zur Selbstkonsistenz verbessert werden.

In einer Ausgestaltung werden bei einer Berechnung von Parametern der Korrespondenzfunktion und/oder bei einer Berechnung von differentialgeometrischen Eigenschaften einer durch die Korrespondenzfunktion gegebenen Transformation für einen Punkt eines Kamerabilds eine Umgebung dieses Punktes in dem Kamerabild genutzt. Dabei kann - in einer Weiterbildung - die "Größe" der Umgebung von der Krümmung des Objekts abhängig gemacht werden. Je stärker die reflektierende Oberfläche des Objekts gekrümmt ist, desto kleiner könnte die Umgebung gewählt werden. Eine Umgebung kann beispielsweise durch eine 3x3-Matrix gebildet sein, wobei in dem mittleren Element (2 2) der die Umgebung definierende Punkt des Kamerabilds angeordnet ist und auf den verbleibenden Punkten die direkten Nachbarn des Punktes (damit lägen 2x9=18 Messdaten zur Bestimmung von 10 Parametern einer mittels Taylor-Entwicklung approximierten, die Korrespondenzfunktion beschreibenden lokalen Transformation bis zur zweiten Ordnung vor). Denkbar wären auch 5x5-Matrizen oder größere Umgebungen.

In einer Weiterbildung können Kurven, die durch mehrere Punkte einer Umgebung eines Punkts des Kamerabilds definiert sind, mathematisch approximiert werden. Derartige Kurven könnten beispielsweise durch eine Spalte oder eine Zeile der vorgenannten Matrixdarstellung gebildet sein. Für eine mathematische Approximation können verschiedene, aus der Praxis bekannte Approximationsmittel genutzt werden. Vorzugsweise kommt eine Taylor-Entwicklung zum Einsatz.

In einer Ausgestaltung sind die Kurven, die durch mehrere Punkte einer Umgebung eines Punkts des Kamerabilds definiert sind, durch Geraden gebildet. Wenn davon ausgegangen wird, dass die Korrespondenzfunktion Punkte eines Kamerabilds auf Punkte des Musters abbildet, so würden bei einem Objekt mit gebogener reflektierender Oberfläche die Geraden in dem Kamerabild auf eine gebogene Kurve in dem Muster abgebildet werden. Auf diese Weise kann für jeden Messpunkt in dem Kamerabild eine Auswertung beliebig vieler Kurvenpaare vorgenommen werden, wie sie unter der vorgenannten Veröffentlichung von Savarese genutzt wird.

Durch die erfindungsgemäße Ausgestaltung des Musters ist es in einer Weiterbildung möglich, bei einer Berechnung der Parameter einer Korrespondenzfunktion und/oder bei einer Berechnung von differentialgeometrischen Eigenschaften einer durch die Korrespondenzfunktion gegebenen Transformation für eine Kurve in dem Kamerabild eine korrespondierende Kurve des Musters zu ermitteln. Dabei ist die korrespondierende Kurve des Musters durch die Punkte des Musters definiert, die nach Reflektion an der reflektierenden Oberfläche des Objekts die betrachtete Kurve in dem Kamerabild erzeugen. Da durch die optischen Eigenschaften des Musters Punkte oder Gruppen von Punkten voneinander unterscheidbar sind, ist eine derartige Zuordnung weitgehend ohne Probleme möglich. Auf diese Weise lässt sich eine vollflächige Berechnung der Position jedes Musterpunkts durchführen. Die Urbilder der Korrespondenzfunktion, d.h. die Kurven in dem Kamerabild, können hierbei z. B. beliebig angeordnete Koordinatenlinien in der Chipebene des Detektors sein. Die Bilder der Korrespondenzfunktion sind dann die sich ergebenden (in der Regel gekrümmten) Kurven der jeweils beobachteten Punkte des Musters. Auf diese Weise lassen sich lokal ungünstige Kurven-Geometrien, wie sie gemäß S. Savarese et al. "Local Shape from Mirror Reflections", International Journal of Computer Vision, 64(1), 31-67 (2005) bei der Verwendung fest vorgegebener Kurven auf dem Muster vorkommen können, vermeiden.

Prinzipiell können die innerhalb des Musters variierenden optischen Eigenschaften auf verschiedenste Weise gebildet sein. Wesentlich ist, dass sich die jeweiligen optischen Eigenschaften in dem Kamerabild widerspiegeln und auf möglichst eindeutige Weise Rückschlüsse auf einen lichtstrahlerzeugenden Punkt des Musters gezogen werden können. Wodurch diese optischen Eigenschaften gebildet sind, ist nicht entscheidend. Vorzugsweise sind die optischen Eigenschaften jedoch durch Helligkeit und/oder Farbe der Punkte des Musters gebildet. Wenn das Muster beispielsweise durch Grauwerte gebildet ist, so wären diese optischen Eigenschaften beispielsweise verschiedene Helligkeiten der Punkte des Musters. Entsprechend des verwendeten Farbraums, beispielsweise 256 verschiedene Graustufen (einschließlich weiß und schwarz), lassen sich auf diese Weise eine Vielzahl unterscheidbaren Punkten bzw. Gruppen von Punkten darstellen. Denkbar wären auch verschiedene Helligkeiten einer Farbe, beispielsweise unterschiedlich helle Grün- oder Blautöne. Die optische Eigenschaft kann auch durch eine Farbe gebildet sein. Hierbei kann ein Farbverlauf über eine Reihe von benachbarten Musterpunkten genutzt werden, beispielsweise ein Farbverlauf von gelb über grün bis blau. Auf diese Weise lassen sich eine noch größere Anzahl von verschiedenen Punkten oder Gruppen von Punkten unterscheiden. Wenn zusätzlich die beiden genannten Ansätze kombiniert werden, also unterschiedliche Helligkeiten und unterschiedliche Farben, kann die unterscheidbare Anzahl von Punkten oder Gruppen von Punkten weiter erhöht werden.

In einer Weiterbildung können Gruppen von Punkten des Musters mit identischen optischen Eigenschaften durch benachbarte Punkte gebildet sein. Derartige benachbarte Punkte können beispielsweise eine Kurve bilden. Diese Kurven können prinzipiell beliebig geschwungen sein und beliebig breit sein. Vorzugsweise sind diese Kurven jedoch durch gerade Linien gebildet, die schmal sind, besonders bevorzugter Weise weniger als 1cm, ganz besonders bevorzugter Weise weniger als 3mm.

In einer Weiterbildung werden die optischen Eigenschaften innerhalb des Musters quasikontinuierlich geändert. Dies bedeutet, dass die Veränderung der optischen Eigenschaft so gering ist, dass sie von einem Betrachter als kontinuierlichen Übergang wahrgenommen wird. Dabei wird vorzugsweise ein sinusförmiger Verlauf verwendet. Die quasikontinuierliche Änderung kann auch auf Teilbereiche beschränkt sein, beispielsweise auf einen Streifen oder ein Quadrat.

Prinzipiell kann das Muster auf verschiedenste Weisen gebildet sein. Dabei kann das Muster so ausgebildet sein, dass jeder einzelne Punkt des gesamten Musters gegenüber einem anderen Punkt des Musters unterscheidbar ist. Auf diese Weise ist eine eineindeutige Zuordnung zwischen Kamerabild und Muster möglich. Dies bedeutet üblicherweise jedoch, dass die Unterschiede zwischen einzelnen Punkten sehr nahe beieinanderliegen. Dies kann bei einer großen Anzahl von unterscheidbaren Punkten dazu führen, dass die Unterschiede messtechnisch praktisch nicht mehr auflösbar sind. Daher sind in einer Weiterbildung Teilbereiche innerhalb der Muster gebildet, innerhalb derer sich die optischen Eigenschaften des Musters verändern. Auf diese Weise kann die Variationsbandbreite der optischen Eigenschaft/en auf einen kleinen Teilbereich des Musters beschränkt werden. Dabei kann es sich anbieten, wenn die einzelnen Teilbereiche identisch zueinander aufgebaut sind oder Ausschnitte der Teilbereiche umfassen. Die auf diese Weise entstehende Mehrdeutigkeit zwischen verschiedenen Teilbereichen lässt sich üblicherweise einfach in den Griff bekommen, beispielsweise mittels sogenannter "Phasen Unwrap"-Verfahren.

Die einzelnen Teilbereiche des Musters können auf unterschiedliche Weise relativ zueinander angeordnet sein. Zur Vereinfachung der Mustererzeugung sind die Teilbereiche jedoch vorzugsweise in einem Raster angeordnet. Dieses Raster kann verschiedentlich gestaltete Rasterelemente aufweisen. Da das Gesamtmuster flächig ausgebildet sein soll, sollten die Rasterelemente jedoch gewährleisten, dass ein flächiges Gesamtmuster entstehen kann, d.h. die Rasterelemente sollten sich ohne Lücken aneinanderreihen lassen. Bevorzugte Ausgestaltungen der Rasterelemente sind dabei Quadrate, Rechtecke, Dreiecke und Sechsecke. Allerdings können auch komplexer gestaltete Rasterelemente genutzt werden.

Das Gesamtmuster oder ein Teilbereich des Musters kann wiederum verschiedentlich aufgebaut sein. Dabei ist das Muster in einer Ausgestaltung ein an das zu vermessende Objekt angepasstes inverses Muster und/oder ein (bandbegrenztes) stochastisches Muster und/oder ein farbcodiertes Muster und/oder ein Streifenmuster mit Helligkeits- und/oder Farbverlauf. Entsprechende Muster sind aus der Praxis bekannt.

In einer Weiterbildung wird das Muster derart erzeugt, dass die Schirmkoordinaten im Rahmen einer aus der Deflektometrie bekannten Phasenkodierung in dem Muster kodiert sind. Insbesondere bei Verwendung eines phasenverschobenen Sinusmusters bzw. der Überlagerung zweier Sinus und der darauffolgenden Demodulation der rekonstruierten Phase (Bereinigung der Phasensprünge) kodiert die Phase des Sinusmusters direkt die Bildschirmkoordinaten (wie aus der phasenschiebenden Deflektometrie bekannt).

In einer Ausgestaltung ist das Muster derart ausgestaltet, dass aus einem einzelnen Muster und einem einzelnen Kamerabild geometrische Eigenschaften der reflektierenden Oberfläche des Objekts ermittelt werden können. In einer anderen Ausgestaltung werden mehrere verschiedene Muster zeitlich nacheinander durch den Mustererzeuger erzeugt werden. Dabei können die mehrere Muster gegeneinander phasenverschoben, um einen definierten Winkel (beispielsweise 90°) gedreht sein, invertiert oder auf sonstige Weise miteinander korreliert sein. Für jedes der mehreren verschiedenen Muster kann dann eine Berechnung von Parametern der Korrespondenzfunktion und/oder von differentialgeometrischen Eigenschaften einer durch die Korrespondenzfunktion gegebenen Transformation wiederholt werden. Durch geeignete Wahl der mehreren Muster kann es selbst bei Mustern, die keine ausreichende Bestimmung von Parametern der Korrespondenzfunktion oder der differentialgeometrischen Eigenschaften erlauben, möglich sein, benötigte Parameter und/oder Eigenschaften in einem iterativen Prozess zu berechnen. Mit jeder Iteration können dann Berechnungen für Parameter und/oder Eigenschaften ergänzt und/oder präzisiert werden.

Je nach Anzahl von Punkten des Kamerabilds und je nach Komplexität der reflektierenden Oberfläche können die Auswertungen der einzelnen Punkte der reflektierenden Oberfläche sehr komplex und rechenintensiv werden. Daher werden in einer Weiterbildung die Punkte im Kamerabild bewusst unterabgetastet, so dass nicht jeder Kamerapunkt oder lediglich eine Mittelung aus mehreren Kamerapunkten verwendet wird. Durch die Unterabtastung entstehen dann Stützpunkte, auf die eine Interpolation oder Regression einer Modellfläche vorgenommen werden kann. Mit einer derart vereinfachten Modellfläche können dann geometrische Eigenschaften ermittelt werden, die der realen reflektierenden Oberfläche zumindest ähnlich sind.

Ein erfindungsgemäßes System zum optischen Vermessen eines Objekts, das insbesondere zur Durchführung eines erfindungsgemäßen Verfahrens ausgebildet ist, umfasst einen Mustererzeuger, eine Kameraeinheit und eine Berechnungseinheit. Der Mustererzeuger ist zum Erzeugen eines flächigen Musters ausgebildet, das derart in mindestens einer optischen Eigenschaft variiert ist, dass zumindest in Teilbereichen des Musters eine Vielzahl von verschiedenen Punkten oder eine Vielzahl von verschiedenen Gruppen von Punkten voneinander unterscheidbar sind. Die Kameraeinheit weist einen Detektor auf, wobei zumindest die Teile des Musters durch eine reflektierende Oberfläche des Objekts als reflektiertes Muster auf den Detektor der Kameraeinheit reflektiert wird, wobei der Detektor zum Wandeln des reflektierten Musters in ein Kamerabild ausgebildet ist und wobei ein Zusammenhang zwischen Punkten des Kamerabilds und korrespondierenden Punkten des Musters mittels einer Korrespondenzfunktion beschreibbar ist, die von geometrischen Eigenschaften der reflektierenden Oberfläche des Objekts abhängig ist. Diese Abhängigkeit bedeutet, dass durch Messung bestimmbare Parameter der Korrespondenzfunktion von geometrischen Eigenschaften der reflektierenden Oberfläche abhängen. Die Berechnungseinheit ist zum Ermitteln zumindest einer der geometrischen Eigenschaften der reflektierenden Oberfläche des Objekts ausgestaltet, wobei hierbei - also beim Ermitteln von geometrischen Eigenschaften - differentialgeometrische Eigenschaften einer durch die Korrespondenzfunktion gegebenen Transformation benutzt werden.

Prinzipiell ist es unerheblich, wie Kameraeinheit und Mustererzeuger relativ zueinander angeordnet sind, solange der Mustererzeuger ein Muster erzeugt, das durch eine reflektierende Oberfläche des Objekts auf den Detektor der Kameraeinheit reflektiert werden kann. Diese Voraussetzung ist in der Regel relativ einfach zu erfüllen. Dabei hat es sich jedoch gezeigt, dass gewisse Anordnungen zu weniger günstigen Verhältnissen führen können. Daher sind in einer Weiterbildung des erfindungsgemäßen Systems die Kameraeinheit und der Mustererzeuger (d.h. die das Muster darstellende Fläche) derart relativ zueinander angeordnet, dass die verwendeten Sichtebenen und der Mustererzeuger nicht senkrecht zueinanderstehen. Eine Sichtebene ist dabei durch einen Sichtstrahl der Kameraeinheit und einen Lichtstrahl aufgespannt, der durch das an der reflektierenden Oberfläche des Objekts reflektierte Muster entsteht. Bei einer senkrechten Anordnung der Sichtebene relativ zu dem Mustererzeuger besitzt die Zielfunktion, die bei den Berechnungen zu minimieren sein wird, ein nur schlecht ausgeprägtes, breites Minimum. Die ist numerisch ungünstig und beschränkt bei verrauschten Messdaten die Messgenauigkeit. Insbesondere bei vornehmlich flachen Objekten kann diese Konstellation dadurch vermieden werden, dass bewusst unter einem schrägen Winkel mit der Kamera über das Objekt auf den Mustererzeuger geschaut wird.

Prinzipiell sind das erfindungsgemäße Verfahren und das erfindungsgemäße System dazu ausgebildet, dass lediglich eine einzelne Kameraeinheit verwendet wird. Durch ein geeignet ausgebildetes Muster lässt sich auch bei derartigen monokularen Systemen eine oder mehrere geometrische Eigenschaften der reflektierenden Oberfläche des Objekts ermitteln. Sofern bei einem periodischen Muster Mehrdeutigkeiten entstehen, lassen sich diese meist problemlos beseitigen. Hierzu sei beispielhaft auf entsprechende, in der Literatur bekannte "Phase-Unwrap"-Verfahren verwiesen. Alternativ können in einer speziellen Ausgestaltung solche durch periodische Muster verursachten Mehrdeutigkeiten auch durch die Verwendung des "Frobenius-Kriteriums" aufgelöst werden, welches im Gegensatz zur Anwendung auf dem nur schwach variierenden potenziellen Normalenfeld (wie in den in der Beschreibungseinleitung genannten Dissertationsschriften von J. Kaminiski bzw. S.B. Werling detailliert beschrieben) in diesem Fall robust anwendbar ist, da die aus (aufgrund von Mehrdeutigkeiten) jeweils periodisch versetzten Schirmpunkten berechneten "Kandidaten-Normalen" üblicherweise außerhalb der "echten" Objektoberfläche sehr stark variieren und somit das lokale Integrabilitätskriterium sehr deutlich verletzen.

In einer Weiterbildung umfasst das System mehrere Kameraeinheiten, die voneinander beabstandet angeordnet sind. Jede dieser Kameras wandelt ein an einer reflektierenden Oberfläche des Objekts reflektiertes Muster in ein Kamerabild. Für jedes dieser einzelnen Kamerabilder können unabhängig voneinander die geometrischen Eigenschaften der reflektierenden Oberfläche des Objekts ermittelt werden. Sofern Mehrdeutigkeiten entstehen sollten, so können die Ergebnisse der Auswertungen der verschiedenen Kamerabilder miteinander kombiniert und dadurch die Mehrdeutigkeiten reduziert oder eliminiert werden.

Es gibt nun verschiedene Möglichkeiten, die Lehre der vorliegenden Erfindung in vorteilhafter Weise auszugestalten und weiterzubilden. Dazu ist einerseits auf die den nebengeordneten Ansprüchen nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen

Fig. 1    eine schematische Darstellung eines Deflektometrie-Systems zur Verdeutlichung der Höhenmehrdeutigkeit bei der Deflektometrie,

Fig. 2    ein erstes aus einem reflektierten Muster mit einem sinusförmigen Streifenverlauf in einer ersten Orientierung gewonnenes Kamera-Phasenbild,

Fig. 3    ein zweites aus einem reflektierten Muster mit einem sinusförmigen Streifenverlauf in einer zweiten Orientierung, senkrecht zu der ersten Orientierung, gewonnenes Kamera-Phasenbild,

Fig. 4    ein drittes Kamera-Phasenbild eines an einer reflektierenden Oberfläche des Objekts reflektierten Musters mit einer additiven Kombination der sinusförmigen Streifenmuster nach Fig. 2 und 3,

Fig. 5    eine schematische Darstellung eines sinusförmigen Kreuz-Musters (Fig. 5A), eines Kamerabilds (Fig. 5B) und einer 3x3-Umgebung eines Punkts des Kamerabilds (Fig. 5C) zur Verdeutlichung der Korrespondenz von Kurven in dem Kamerabild und in dem Muster und

Fig. 6    eine schematische Darstellung eines Ausführungsbeispiels eines erfindungsgemäßen Systems mit einem doppelt-sinusförmigen Muster.

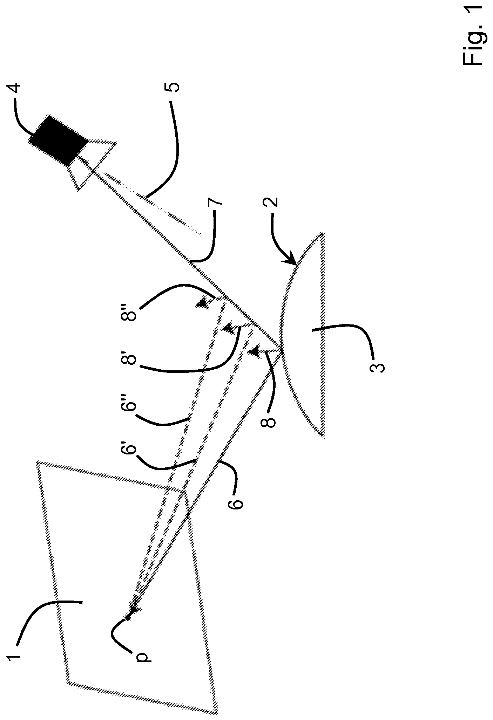

Fig. 1 zeigt eine schematische Darstellung einer typischen Deflektometrie-Situation. Ein Mustererzeuger 1 erzeugt ein Muster, das an einer reflektierenden Oberfläche 2 eines Objekts 3 als reflektiertes Muster in eine Kameraeinheit 4 reflektiert wird. Ein nicht dargestellter Detektor der Kameraeinheit 4 erzeugt aus dem reflektierten Muster ein Kamerabild. Eine Sichtachse der Kamera (gebildet durch die optische Achse der Kameraoptik) ist mit Bezugszeichen 5 eingezeichnet. Ein in dem Kamerabild ersichtlicher Punkt q, der durch Reflektion an der reflektierenden Oberfläche 2 aus einem Punkt p des Musters hervorgegangen ist, kann durch verschiedene Lichtstrahlen erzeugt werden, von denen drei verschiedene Möglichkeiten beispielhaft in Fig. 1 eingezeichnet sind. Jeder der in Fig. 1 dargestellten Lichtstrahlen 6, 6', 6" kann einen reflektierten Lichtstrahl 7 und damit einen beleuchteten Punkt q auf dem Detektor der Kameraeinheit 4 hervorrufen. Abhängig davon, welcher der Lichtstrahlen 6, 6', 6" korrekt ist, ergeben sich unterschiedliche Höhen. Da in jedem Fall der Winkel des einfallenden Lichtstrahls 6, 6', 6" relativ zu der Oberflächennormalen und der Winkel des reflektierten Strahls 7 relativ zu der Oberflächennormalen gleich sind, ergeben sich abhängig von dem korrekten Lichtstrahl 6, 6', 6" unterschiedliche Oberflächennormalen 8, 8', 8". Es ist zu erkennen, dass diese Mehrdeutigkeit gelöst werden muss, um die geometrischen Eigenschaft "Höhe" und "Neigung" der reflektierenden Oberfläche 2 korrekt ermitteln zu können.

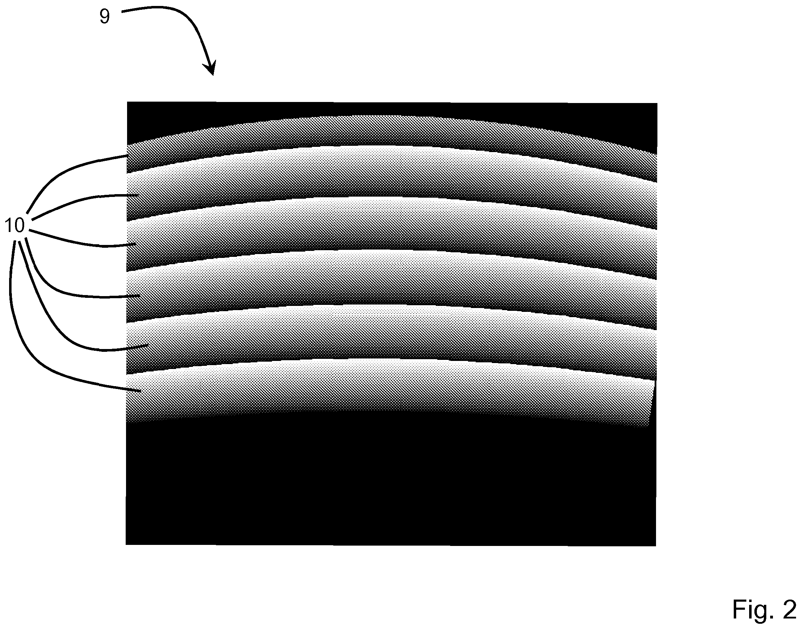

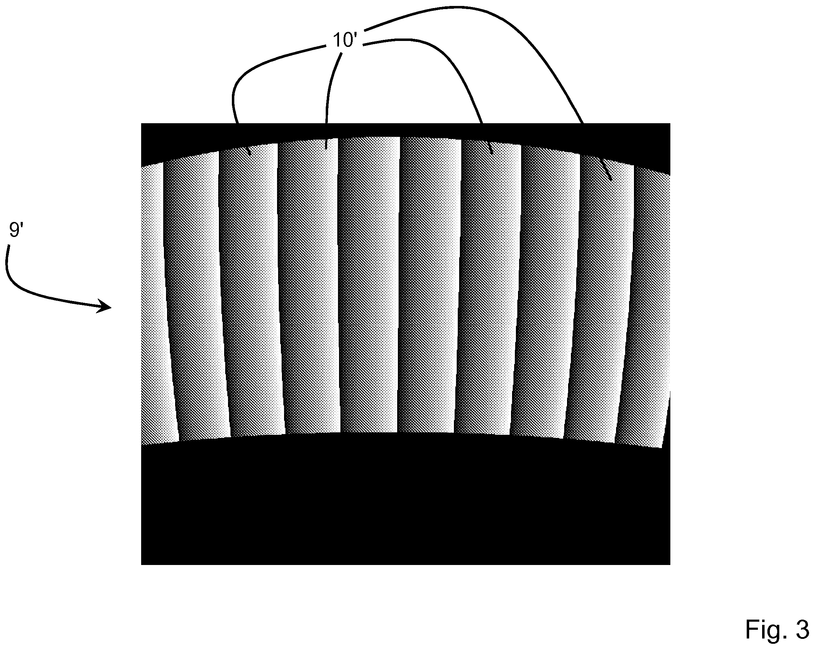

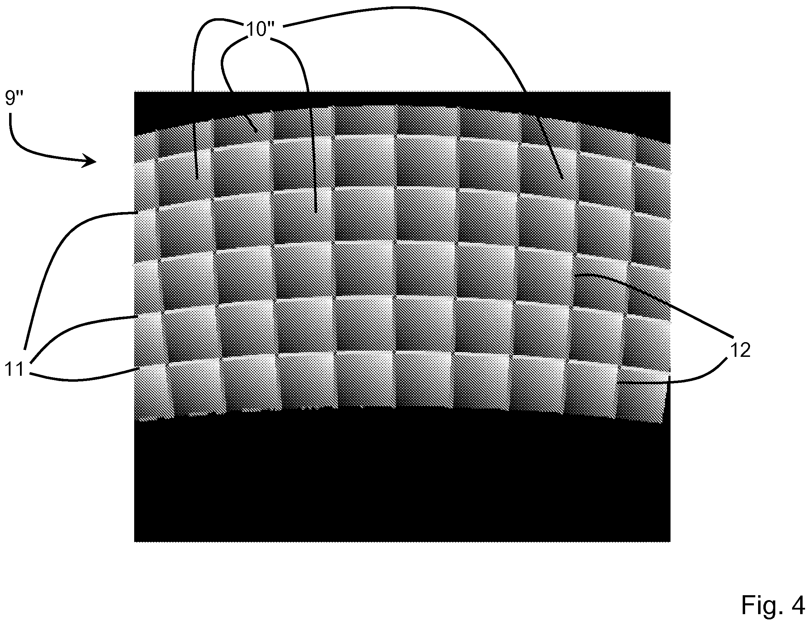

In den Fig. 2 bis 4 sind verschiedene Kamerabilder 9, 9', 9" dargestellt, die am Beispiel phasenmessender Deflektometrie durch Reflektion eines durch den Mustererzeuger 1 erzeugten Musters an einer leicht gekrümmten reflektierenden Oberfläche 2 eines Objekts 3 entstanden sind. In Fig. 2 ist das Kamerabild 9 durch horizontal ausgerichtete, gekrümmte Streifen mit einem Helligkeitsverlauf gebildet, wie er nach einer geeigneten Phasenauswertung aus einem ursprünglich sinusförmigen Helligkeitsverlauf gewonnen werden kann. In Fig. 3 ist das Muster um 90° im Uhrzeigersinn gedreht, sodass vertikale, gekrümmte Streifen entstehen, die einen Helligkeitsverlauf aufweisen, wie er nach geeigneter Phasenauswertung aus einem ursprünglich sinusförmigen Helligkeitsverlauf gewonnen werden kann. In Fig. 4 sind die beiden Muster aus Fig. 2 und 3 kombiniert, sodass das Kamerabild 9" eine Kombination von in horizontaler Richtung gekrümmter Streifen und in vertikaler Richtung gekrümmter Streifen bildet. Zudem sind farblich Orte gleicher Phase 11, 12 markiert, wobei in horizontaler Richtung die Orte gleicher Phase 11 grün dargestellt sind und in vertikaler Richtung die Orte gleicher Phase 12 rot. In jedem der dargestellten Kamerabilder 9, 9', 9" entstehen Teilbereiche 11, innerhalb derer mindestens eine optische Eigenschaft des Musters - nämlich die Phase des jeweils sinusförmig variierenden Helligkeitsverlaufs des Musters - variiert, sodass auf einem Kamerabild auf eine Gruppe von Punkten - nämlich Linien mit gleicher Phase - geschlossen werden kann. Alle drei Kamerabilder 9, 9', 9" können dazu genutzt werden, um unter Nutzung von differentialgeometrischen Eigenschaften einer durch die Korrespondenzfunktion gegebenen Transformation geometrische Eigenschaften der reflektierenden Oberfläche zu ermitteln und damit eine Punktwolke zu ermitteln, die die Struktur der Oberfläche beschreibt.

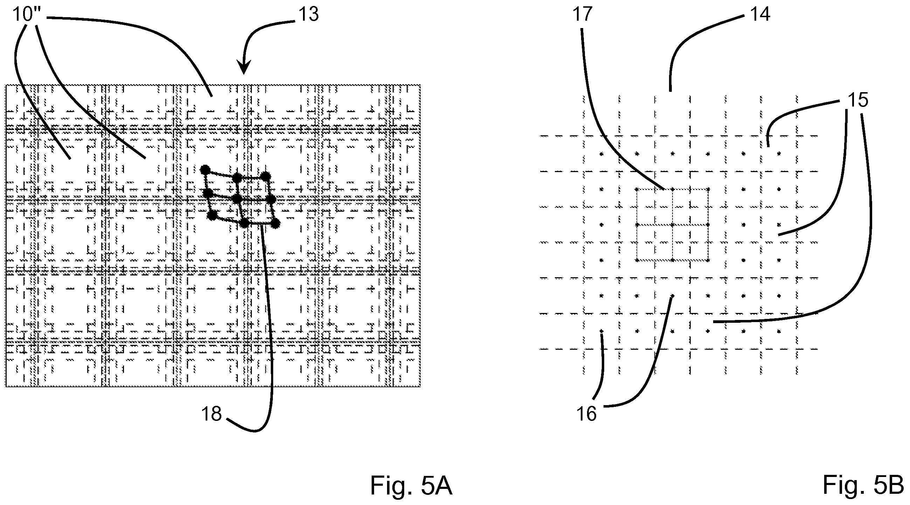

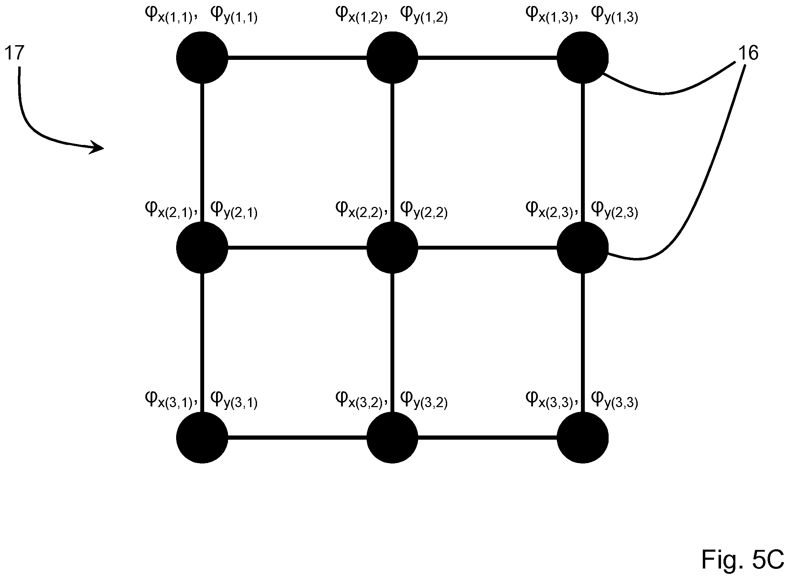

Fig. 5 zeigt, dass sich die Korrespondenzfunktion in einer Umgebung lokal als Taylorentwicklung approximieren lässt. Die Urbilder der Korrespondenzfunktion sind hierbei beliebig angeordnete Koordinatenlinien in der Detektorebene, die Bilder sind die sich ergebenden (in der Regel gekrümmten) Kurven der jeweils beobachteten Phasenwerte $\varphi$ auf dem Schirm. In Fig. 5A ist ein Muster 13 dargestellt, das mehrere Teilbereiche 10" in einem quadratischen Raster aufweist. Innerhalb jedes Teilbereichs 10" ist ein doppelt-sinusförmiger Verlauf einer optischen Eigenschaft ausgebildet, die in diesem Fall wiederum durch die Helligkeit der Musterpunkte gebildet ist. Konkret handelt es sich bei dem doppelt-sinusförmigen Verlauf um zwei zueinander um 90° versetzte Sinusmuster, die nach geeigneter Phasenauswertung das Kamerabild aus Figur 4 ergeben. Fig. 5B zeigt schematisch einen Ausschnitt eines Detektors 14 einer Kameraeinheit 4, wobei die einzelnen Pixel 15 durch den Mittelpunkt 16 lokalisiert sind. In Fig. 5B ist zudem ein Punkt p sowie dessen direkte Nachbarn (3x3-Umgebung) eingezeichnet, wobei die insgesamt 9 Punkte jeweils durch horizontale bzw. vertikale Linien miteinander verbunden sind, die Kurven 17 im Kamerabild bilden. In Fig. 5C ist diese 3x3-Umgebung nochmals vergrößert dargestellt, wobei an jedem Punkt eine Variable $\varphi_{x(i,j)}$, $\varphi_{y(i,j)}$ für eine Matrixdarstellung eingezeichnet ist. Wenn für jeden der Punkte der 3x3-Umgebung ein korrespondierender Punkt des Musters 13 gesucht wird, ergeben sich beispielsweise die in Fig. 5A dargestellten Kurven 18.

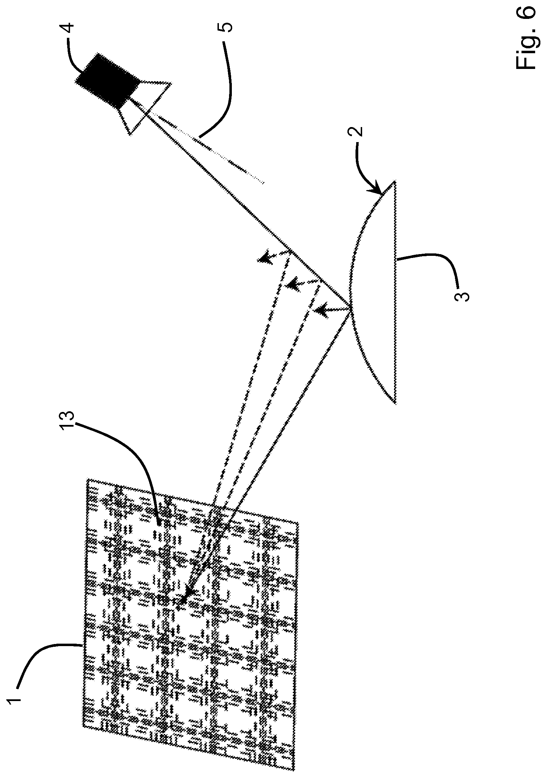

Fig. 6 stellt die Abbildungsgeometrie bei dem erfindungsgemäßen System dar und entspricht in weiten Teilen der Darstellung in Fig. 1. Durch Nutzung eines besonders ausgestalteten Musters und durch Berechnung von differentialgeometrischen Eigenschaften kann nun jedoch die Höhenmehrdeutigkeiten beseitigt werden.

Hinsichtlich weiterer vorteilhafter Ausgestaltungen wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

**Bezugszeichenliste**

| 1 | Mustererzeuger |
|---|---|
| 2 | reflektierende Oberfläche |
| 3 | Objekt |
| 4 | Kameraeinheit |
| 5 | Sichtachse |
| 6 | Lichtstrahl |
| 7 | reflektierter Lichtstrahl |
| 8 | Oberflächennormale |
| 9 | Kamerabild |
| 10 | Teilbereich |
| 11 | Orte gleicher Phase (horizontal) |
| 12 | Orte gleicher Phase (vertikal) |
| 13 | Muster |
| 14 | Detektor |
| 15 | Pixel |
| 16 | Mittelpunkt (eines Pixels) |
| 17 | Kurven (auf Detektor/in Kamerabild) |
| 18 | Kurven (in Muster) |

**Patentansprüche**

1. Verfahren zum optischen Vermessen eines Objekts mit spiegelnder und/oder teilspiegelnder Oberfläche,

wobei mittels eines Mustererzeugers (1) ein flächiges Muster (13) erzeugt wird, das derart in mindestens einer optischen Eigenschaft variiert ist, dass zumindest in Teilbereichen (10) eine Vielzahl von verschiedenen Punkten (p) oder eine Vielzahl von verschiedenen Gruppen von Punkten voneinander unterscheidbar sind,
wobei zumindest Teile des Musters (13) durch eine reflektierende Oberfläche (2) des Objekts (3) als reflektiertes Muster auf einen Detektor (14) einer Kameraeinheit (4) reflektiert werden, wobei das reflektierte Muster durch den Detektor (14) in ein Kamerabild (9) gewandelt wird, wobei ein Zusammenhang zwischen Punkten (q) des Kamerabilds (9) und korrespondierenden Punkten (p) des Musters (13) mittels einer Korrespondenzfunktion beschreibbar ist, die von geometrischen Eigenschaften der reflektierenden Oberfläche (2) des Objekts (3) abhängig ist,
**dadurch gekennzeichnet, dass** zumindest eine der geometrischen Eigenschaften der reflektierenden Oberfläche (2) des Objekts (3) durch Nutzung von differentialgeometrischen Eigenschaften einer durch die Korrespondenzfunktion gegebenen Transformation durch eine Berechnungseinheit ermittelt wird, wobei die Korrespondenzfunktion mindestens einmal lokal abgeleitet wird und aus einer Betrachtung der Korrespondenzfunktion und deren Ableitung/en Informationen über die geometrische Beschaffenheit der reflektierenden Oberfläche (2) gewonnen werden und

dass bei einer Berechnung von Parametern der Korrespondenzfunktion und/oder bei einer Berechnung von differentialgeometrischen Eigenschaften einer durch die Korrespondenzfunktion gegebenen Transformation für einen Punkt (q) des Kamerabilds (9) eine Umgebung dieses Punktes in dem Kamerabild (9) genutzt wird.

2. Verfahren nach Anspruch 1, **dadurch gekennzeichnet, dass** die geometrische Eigenschaft der reflektierenden Oberfläche (2) des Objekts (3) eine Höheninformation und/oder eine Neigungsinformation und/oder eine Krümmungsinformation umfasst.

3. Verfahren nach Anspruch 1 oder 2, **dadurch gekennzeichnet, dass** eine durch mehrere Punkte einer Umgebung eines Punkts (p) des Kamerabilds (9) definierte Kurve (17) mathematisch approximiert wird, wobei vorzugsweise eine Taylor-Entwicklung genutzt wird.

4. Verfahren nach einem der Ansprüche 1 bis 3, **dadurch gekennzeichnet, dass** bei einer Berechnung von Parametern der Korrespondenzfunktion und/oder bei einer Berechnung von differentialgeometrischen Eigenschaften einer durch die Korrespondenzfunktion gegebenen Transformation für eine Kurve (17) in dem Kamerabild (9) eine korrespondierende Kurve (18) des Musters (13) ermittelt wird, wobei die korrespondierende Kurve (18) des Musters (13) durch die Punkte des Musters (13) gebildet sind, die nach Reflektion an der reflektierenden Oberfläche (2) des Objekts (3) die Kurve (17) in dem Kamerabild (9) erzeugen.

5. Verfahren nach einem der Ansprüche 1 bis 4, **dadurch gekennzeichnet, dass** die innerhalb des Musters (13) variierende mindestens eine optische Eigenschaft durch Helligkeit und/oder Farbe der Punkte des Musters (13) und/oder Phase eines sinusförmigen Helligkeitsverlaufs gebildet werden und/oder
dass Gruppen von Punkten des Musters (13) mit identischen optischen Eigenschaften durch benachbarte Punkte gebildet werden, die vorzugsweise auf einer Kurve angeordnet sind.

6. Verfahren nach einem der Ansprüche 1 bis 5, **dadurch gekennzeichnet, dass** die optischen Eigenschaften innerhalb des Musters (13) zumindest in Teilbereichen (10) quasikontinuierlich, vorzugsweise sinusförmig, geändert werden, so dass vorzugsweise die Punkte des Musters durch lokale Phasen eines sinusförmigen Helligkeitsverlaufs codiert werden.

7. Verfahren nach einem der Ansprüche 1 bis 6, **dadurch gekennzeichnet, dass** das Muster (13) Teilbereiche (10) aufweist, innerhalb derer die optischen Eigenschaften des Musters (13) variiert sind, wobei die einzelnen Teilbereiche (10) vorzugsweise identisch zueinander aufgebaut sind,
wobei die Teilbereiche (10) vorzugsweise in einem Raster angeordnet sind, wobei das Raster in besonders bevorzugter Weise durch quadratische, rechteckige dreieckige oder sechseckige Rasterelemente gebildet wird.

8. Verfahren nach einem der Ansprüche 1 bis 7, **dadurch gekennzeichnet, dass** für das Muster (13) ein inverses Muster und/oder ein bandbegrenztes stochastisches Muster und/oder ein farbcodiertes Muster und/oder ein Streifenmuster mit Helligkeits- und/oder Farbverlauf verwendet wird, und/oder
dass das Muster (13) derart erzeugt wird, dass Schirmkoordinaten in dem Muster (13) kodiert sind.

9. Verfahren nach einem der Ansprüche 1 bis 8, **dadurch gekennzeichnet, dass** mehrere verschiedene Muster (13) nacheinander durch den Mustererzeuger (1) erzeugt werden, wobei die mehreren Muster (13) vorzugsweise gegeneinander phasenverschoben sind, dass Berechnungen von Parametern der Korrespondenzfunktion und/oder Berechnungen von differentialgeometrischen Eigenschaften einer durch die Korrespondenzfunktion gegebenen Transformation für das geänderte Muster (13) wiederholt werden, wobei vorzugsweise die mehreren Muster (13) derart gewählt werden, dass berechnete Parameter und/oder Eigenschaften mit Berechnungen für eines der mehreren Muster (13) ergänzt und/oder präzisiert werden.

10. Verfahren nach einem der Ansprüche 1 bis 9, **dadurch gekennzeichnet, dass** Punkte im Kamerabild (9) unterabgetastet werden und dass auf derart gewonnenen Stützpunkten eine Interpolation oder Regression einer Modellfläche vorgenommen wird.

11. Verfahren nach einem der Ansprüche 1 bis 10, **dadurch gekennzeichnet, dass** im Falle von Mehrdeutigkeiten bei einer Codierung des Musters diese durch Anwendung des Frobenius-Kriteriums oder eines geeigneten anderen lokalen Integrabilitäts- oder Glattheitskriteriums auf einem Vektorfeld von aufgrund der Muster-Periodizität entstehenden potenziellen Mehrdeutigkeits-Normalen aufgelöst werden.

**12.** System zum optischen Vermessen eines Objekts mit spiegelnder und/oder teilspiegelnder Oberfläche, zur Durchführung eines Verfahrens nach einem der Ansprüche 1 bis 11, umfassend:

einen Mustererzeuger (1) zum Erzeugen eines flächigen Musters (13), das derart in mindestens einer optischen Eigenschaft variiert ist, dass zumindest in Teilbereichen (10) eine Vielzahl von verschiedenen Punkten oder eine Vielzahl von verschiedenen Gruppen von Punkten voneinander unterscheidbar sind, eine Kameraeinheit (4) mit einem Detektor (14), wobei zumindest Teile des Musters (13) durch eine reflektierende Oberfläche (2) des Objekts (3) als reflektiertes Muster auf den Detektor (14) der Kameraeinheit (4) reflektiert wird, wobei der Detektor (14) zum Wandeln des reflektierten Musters in ein Kamerabild (9) ausgebildet ist und wobei ein Zusammenhang zwischen Punkten des Kamerabilds (9) und korrespondierenden Punkten des Musters (13) mittels einer Korrespondenzfunktion beschreibbar ist, die von geometrischen Eigenschaften der reflektierenden Oberfläche (2) des Objekts (3) abhängig ist, **gekennzeichnet durch** eine Berechnungseinheit, die zum Ermitteln zumindest einer der geometrischen Eigenschaften der reflektierenden Oberfläche (2) des Objekts (3) ausgestaltet ist, wobei hierbei differentialgeometrischen Eigenschaften einer **durch** die Korrespondenzfunktion gegebenen Transformation genutzt werden, wobei die Korrespondenzfunktion mindestens einmal lokal abgeleitet wird und aus einer Betrachtung der Korrespondenzfunktion und deren Ableitung/en Informationen über die geometrische Beschaffenheit der reflektierenden Oberfläche (2) gewonnen werden und wobei bei einer Berechnung von Parametern der Korrespondenzfunktion und/oder bei einer Berechnung von differentialgeometrischen Eigenschaften einer durch die Korrespondenzfunktion gegebenen Transformation für einen Punkt (q) des Kamerabilds (9) eine Umgebung dieses Punktes in dem Kamerabild (9) genutzt wird.

**13.** System nach Anspruch 12, **dadurch gekennzeichnet, dass** die Kameraeinheit (4) und der Mustererzeuger (1) derart relativ zueinander angeordnet sind, dass die zur Auswertung verwendeten Sichtebenen und der Mustererzeuger (1) nicht senkrecht zueinander stehen, wobei die Sichtebene durch eine Sichtachse (5) der Kameraeinheit (4) und einen Lichtstrahl, der durch das an der reflektierenden Oberfläche (2) des Objekts (3) reflektierte Muster (13) entsteht, aufgespannt ist.

**14.** System nach Anspruch 12 oder 13, **gekennzeichnet durch** mehrere voneinander beabstandet angeordnete Kameraeinheiten (4), die jeweils ein an einer reflektierenden Oberfläche (2) des Objekts (3) reflektiertes Muster (13) in ein Kamerabild (9) wandeln, und dass die geometrischen Eigenschaften der reflektierenden Oberfläche (2) des Objekts (3) aus den mehreren Kamerabildern (9) ermittelt werden.

**15.** Messanordnung bestehend aus einem System nach einem der Ansprüche 12 bis 14 und einem zu vermessenden Objekt.

**Claims**

**1.** Method for optically measuring an object with a reflective and/or partially reflective surface,

wherein there is produced by means of a pattern generator (1) a flat pattern (13) which is varied in terms of at least one optical property in such a manner that at least in part-regions (10) a large number of different points (p) or a large number of different groups of points can be distinguished from each other, wherein at least portions of the pattern (13) are reflected by a reflective surface (2) of the object (3) as a reflected pattern onto a detector (14) of a camera unit (4), wherein the reflected pattern is converted by means of the detector (14) into a camera image (9), wherein a relationship between points (q) of the camera image (9) and corresponding points (p) of the pattern (13) can be described by means of a correspondence function which is dependent on geometric properties of the reflective surface (2) of the object (3), **characterised in that** at least one of the geometric properties of the reflective surface (2) of the object (3) is established by using differential geometric properties of a transformation provided by the correspondence function by means of a calculation unit, wherein the correspondence function is derived at least once locally and, from a consideration of the correspondence function and the derivative(s) thereof, information items relating to the geometric nature of the reflective surface (2) are obtained, and **in that**, when parameters of the correspondence function are calculated and/or when differential geometric properties of a transformation provided by the correspondence function for a point (q) of the camera image (9) are calculated, a neighbourhood of this point is used in the camera image (9).

2. Method according to claim 1, **characterised in that** the geometric property of the reflective surface (2) of the object (3) comprises a height information item and/or an inclination information item and/or a curvature information item.

3. Method according to claim 1 or 2, **characterised in that** a curve (17) defined by means of a plurality of points of a neighbourhood of a point (p) of the camera image (9) is approximated mathematically, wherein a Taylor expansion is preferably used.

4. Method according to any one of claims 1 to 3, **characterised in that**, when parameters of the correspondence function are calculated and/or when differential geometric properties of a transformation provided by the correspondence function for a curve (17) in the camera image (9) are calculated, a corresponding curve (18) of the pattern (13) is established, wherein the corresponding curve (18) of the pattern (13) is formed by the points of the pattern (13) which after reflection on the reflective surface (2) of the object (3) produce the curve (17) in the camera image (9).

5. Method according to any one of claims 1 to 4, **characterised in that** at least one optical property which varies within the pattern (13) is/are formed by means of brightness and/or colour of the points of the pattern (13) and/or phase of a sinusoidal brightness curve and/or in that groups of points of the pattern (13) with identical optical properties are formed by adjacent points which are preferably arranged on a curve.

6. Method according to any one of claims 1 to 5, **characterised in that** the optical properties within the pattern (13) are changed at least in part-regions (10) in a virtually continuous manner, preferably sinusoidally, so that the points of the pattern are preferably encoded by means of local phases of a sinusoidal brightness curve.

7. Method according to any one of claims 1 to 6, **characterised in that** the pattern (13) has part-regions (10) within which the optical properties of the pattern (13) are varied, wherein the individual part-regions (10) are preferably constructed identically to each other,
wherein the part-regions (10) are preferably arranged in a grid, wherein the grid is in a particularly preferred manner formed by means of square, rectangular, triangular or hexagonal grid elements.

8. Method according to any one of claims 1 to 7, **characterised in that** for the pattern (13) an inverse pattern and/or a band-limited stochastic pattern and/or a colour-coded pattern and/or a stripe pattern with a brightness curve and/or colour gradient is used, and/or
**in that** the pattern (13) is produced in such a manner that screen coordinates are encoded in the pattern (13).

9. Method according to any one of claims 1 to 8, **characterised in that** a plurality of different patterns (13) are produced one after the other by means of the pattern generator (1), wherein the plurality of patterns (13) are preferably phase-shifted relative to each other so that calculations of parameters of the correspondence function and/or calculations of differential geometric properties of a transformation which is provided by the correspondence function for the changed pattern (13) are repeated, wherein the plurality of patterns (13) are preferably selected in such a manner that calculated parameters and/or properties are supplemented and/or made more precise by means of calculations for one of the plurality of patterns (13).

10. Method according to any one of claims 1 to 9, **characterised in that** points in the camera image (9) are undersampled and **in that** on support points which are obtained in this manner an interpolation or regression of a model face is carried out.

11. Method according to any one of claims 1 to 10, **characterised in that**, in the case of ambiguities during encoding of the pattern, by using the Frobenius criterion or a suitable other local integrability or smoothness criterion on a vector field of potential ambiguity normals which are produced as a result of the pattern periodicity, they are resolved.

12. System for optically measuring an object with a reflective and/or partially reflective surface, for carrying out a method according to any one of claims 1 to 11, comprising:

a pattern generator (1) for producing a flat pattern (13) which is varied in terms of at least one optical property in such a manner that at least in part-regions (10) a large number of different points or a large number of different groups of points can be distinguished from each other,
a camera unit (4) having a detector (14), wherein at least portions of the pattern (13) are reflected by means of a reflective surface (2) of the object (3) as a reflected pattern onto the detector (14) of the camera unit (4), wherein the detector (14) is constructed to convert the reflected pattern into a camera image (9), and wherein a relationship between points of the camera image (9) and corresponding points of the pattern (13) can be described by means of a correspondence function which is dependent on geometric properties of the reflective surface (2) of the object (3), **characterised by**

a calculation unit which is configured to establish at least one of the geometric properties of the reflective surface (2) of the object (3), wherein in this instance differential geometric properties of a transformation which is provided by the correspondence function are used, wherein the correspondence function is derived locally at least once and, from a consideration of the correspondence function and the derivative(s) thereof, information items relating to the geometric nature of the reflective surface (2) are obtained, and wherein, when parameters of the correspondence function are calculated and/or when differential geometric properties of a transformation provided by the correspondence function for a point (q) of the camera image (9) are calculated, a neighbourhood of this point is used in the camera image (9).

13. System according to claim 12, **characterised in that** the camera unit (4) and the pattern generator (1) are arranged relative to each other in such a manner that the viewing planes which are used for evaluation and the pattern generator (1) are not located perpendicularly to each other, wherein the viewing plane is defined by a viewing axis (5) of the camera unit (4) and a light beam which is produced by means of the pattern (13) reflected on the reflective surface (2) of the object (3).

14. System according to claim 12 or 13, **characterised by** means of a plurality of camera units (4) which are arranged spaced apart from each other and which in each case convert a pattern (13) reflected on a reflective surface (2) of the object (3) into a camera image (9), and in that the geometric properties of the reflective surface (2) of the object (3) are established from the plurality of camera images (9).

15. Measurement arrangement comprising a system according to any one of claims 12 to 14 and an object to be measured.

## Revendications

1. Procédé de mesure optique d'un objet avec une surface réfléchissante et/ou partiellement réfléchissante,

dans lequel un générateur de motifs (1) produit un motif de surface (13) qui varie dans au moins une propriété optique de sorte qu'une pluralité de points différents (p) ou une pluralité de groupes de points différents peuvent être distingués les uns des autres, au moins dans des zones partielles (10),
dans lequel au moins des parties du motif (13) sont réfléchies par une surface réfléchissante (2) de l'objet (3) en tant que motif réfléchi sur un détecteur (14) d'une unité de caméra (4), dans lequel le motif réfléchi est converti par le détecteur (14) en une image de caméra (9), dans lequel une relation entre des points (q) de l'image de caméra (9) et des points correspondants (p) du motif (13) peut être décrite au moyen d'une fonction de correspondance qui dépend des propriétés géométriques de la surface réfléchissante (2) de l'objet (3),
**caractérisé en ce qu'**au moins une des propriétés géométriques de la surface réfléchissante (2) de l'objet (3) est déterminée par une unité de calcul en utilisant des propriétés différentielles géométriques d'une transformation donnée par la fonction de correspondance, dans lequel la fonction de correspondance est dérivée localement au moins une fois, et des informations sur la nature géométrique de la surface réfléchissante (2) sont obtenues à partir d'une considération de la fonction de correspondance et de sa/ses dérivée(s) ; et
**en ce que**, lors du calcul des paramètres de la fonction de correspondance et/ou lors du calcul des propriétés différentielles géométriques d'une transformation donnée par la fonction de correspondance pour un point (q) de l'image de caméra (9), un environnement de ce point dans l'image de caméra (9) est utilisé.

2. Procédé selon la revendication 1, **caractérisé en ce que** la propriété géométrique de la surface réfléchissante (2) de l'objet (3) comprend une information de hauteur et/ou une information d'inclinaison et/ou une information de courbure.

3. Procédé selon la revendication 1 ou 2, **caractérisé en ce qu'**une courbe (17) définie par plusieurs points d'un environnement d'un point (p) de l'image de caméra (9) est approximée mathématiquement, une série de Taylor étant de préférence utilisée.

4. Procédé selon l'une des revendications 1 à 3, **caractérisé en ce que**, lors du calcul des paramètres de la fonction de correspondance et/ou lors du calcul des propriétés différentielles géométriques d'une transformation donnée par la fonction de correspondance pour une courbe (17) dans l'image de caméra (9), une courbe correspondante (18) du motif (13) est déterminée, la courbe correspondante (18) du motif (13) étant formée par les points du motif (13) qui, après réflexion sur la surface réfléchissante (2) de l'objet (3), génèrent la courbe (17) dans l'image de caméra (9).

5. Procédé selon l'une des revendications 1 à 4, **caractérisé en ce que** l'au moins une propriété optique variant à l'intérieur du motif (13) est formée par la luminosité et/ou la couleur des points du motif (13) et/ou la phase d'une variation de luminosité sinusoïdale et/ou
**en ce que** des groupes de points du motif (13) avec des propriétés optiques identiques sont formés par des points adjacents, qui sont de préférence agencés sur une courbe.

6. Procédé selon l'une des revendications 1 à 5, **caractérisé en ce que** les propriétés optiques à l'intérieur du motif (13) sont modifiées de manière quasi continue, de préférence de manière sinusoïdale, au moins dans des zones partielles (10), de sorte que les points du motif sont de préférence codés par des phases locales d'une variation de luminosité sinusoïdale.

7. Procédé selon l'une des revendications 1 à 6, **caractérisé en ce que** le motif (13) présente des zones partielles (10), à l'intérieur desquelles les propriétés optiques du motif (13) varient, les zones partielles (10) étant de préférence construites de manière identique les unes aux autres,

   dans lequel les zones partielles (10) sont de préférence agencées dans une trame,
   dans lequel la trame est formée de manière particulièrement préférée par des éléments de trame carrés, rectangulaires, triangulaires ou hexagonaux.

8. Procédé selon l'une des revendications 1 à 7, **caractérisé en ce que** pour le motif (13) est utilisé un motif inverse et/ou un motif stochastique à bande limitée et/ou un motif codé en couleur et/ou un motif de bandes avec un dégradé de luminosité et/ou de couleur, et/ou
**en ce que** le motif (13) est généré de telle sorte que les coordonnées de l'écran sont codées dans le motif (13).

9. Procédé selon l'une des revendications 1 à 8, **caractérisé en ce que** plusieurs motifs différents (13) sont générés successivement par le générateur de motifs (1), les plusieurs motifs (13) étant de préférence déphasés les uns par rapport aux autres, les calculs des paramètres de la fonction de correspondance et/ou les calculs des propriétés différentielles géométriques d'une transformation donnée par la fonction de correspondance étant répétés pour le motif modifié (13), les plusieurs motifs (13) étant de préférence choisis de telle sorte que les paramètres et/ou propriétés calculés soient complétés et/ou précisés par des calculs pour l'un des plusieurs motifs (13).

10. Procédé selon l'une des revendications 1 à 9, **caractérisé en ce que** des points dans l'image de caméra (9) sont sous-échantillonnés et qu'une interpolation ou une régression d'une surface modèle est effectuée sur les points d'appui ainsi obtenus.

11. Procédé selon l'une des revendications 1 à 10, **caractérisé en ce que**, en cas d'ambiguïtés lors d'un codage du motif, celles-ci sont résolues par application du critère de Frobenius ou d'un autre critère d'intégrabilité locale ou de régularité approprié sur un champ vectoriel de normales potentielles d'ambiguïté résultant de la périodicité du motif.

12. Système de mesure optique d'un objet avec une surface réfléchissante et/ou partiellement réfléchissante, pour la mise en œuvre d'un procédé selon l'une des revendications 1 à 11, comprenant :

   un générateur de motifs (1) pour générer un motif de surface (13) qui varie dans au moins une propriété optique de telle sorte qu'une pluralité de points différents ou une pluralité de groupes de points différents peuvent être distingués les uns des autres, au moins dans des zones partielles (10),
   une unité de caméra (4) avec un détecteur (14), dans lequel au moins des parties du motif (13) sont réfléchies par une surface réfléchissante (2) de l'objet (3) en tant que motif réfléchi sur le détecteur (14) de l'unité de caméra (4), le détecteur (14) étant configuré pour convertir le motif réfléchi en une image de caméra (9) et une relation entre des points de l'image de caméra (9) et des points correspondants du motif (13) pouvant être décrite au moyen d'une fonction de correspondance qui dépend des propriétés géométriques de la surface réfléchissante (2) de l'objet (3), **caractérisé par** :
   une unité de calcul, qui est configurée pour déterminer au moins une des propriétés géométriques de la surface réfléchissante (2) de l'objet (3), des propriétés différentielles géométriques d'une transformation donnée par la fonction de correspondance étant utilisées, la fonction de correspondance étant dérivée localement au moins une fois, et des informations sur la nature géométrique de la surface réfléchissante (2) étant obtenues à partir d'une considération de la fonction de correspondance et de salses dérivée(s) ; et lors du calcul des paramètres de la fonction de correspondance et/ou lors du calcul des propriétés différentielles géométriques d'une transformation donnée par la fonction de correspondance pour un point (q) de l'image de caméra (9), un environnement de ce point dans l'image de caméra (9) est utilisé.

13. Système selon la revendication 12, **caractérisé en ce que** l'unité de caméra (4) et le générateur de motifs (1) sont agencés l'un par rapport à l'autre de telle sorte que les plans de vision utilisés pour l'évaluation et le générateur de motifs (1) ne sont pas perpendiculaires l'un à l'autre, le plan de vision étant défini par un axe de vision (5) de l'unité de caméra (4) et un rayon lumineux qui est produit par le motif (13) réfléchi sur la surface réfléchissante (2) de l'objet (3).

14. Système selon la revendication 12 ou 13, **caractérisé par** plusieurs unités de caméra (4) agencées à distance les unes des autres, chacune convertissant un motif (13) réfléchi sur une surface réfléchissante (2) de l'objet (3) en une image de caméra (9), et en ce que les propriétés géométriques de la surface réfléchissante (2) de l'objet (3) sont déterminées à partir des plusieurs images de caméra (9).

15. Dispositif de mesure composé d'un système selon l'une des revendications 12 à 14 et d'un objet à mesurer.

Fig. 1

EP 3 799 651 B1

Fig. 2

Fig. 3

Fig. 4

Fig. 5A

Fig. 5B

Fig. 5C

EP 3 799 651 B1

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19944354 A1
- EP 1837623 A1
- DE 10014964 A1

- DE 102004020419 B3
- WO 2016209412 A1


**In der Beschreibung aufgeführte Nicht-Patentliteratur**

- General Specular Surface Triangulation. **T. BON-FORT et al.** Proceedings of the 7th Asian Conference on Computer Vision. Springer-Verlag, 2006, 872-882
- **E. SLOGSNAT et al.** Non-stereoscopic Method for Deflectometric Measurement of Reflecting Surfaces. *Proc. DGaO*, 2009, vol. 110, A11
- **J. KAMINSKI**. Geometrische Rekonstruktion spiegelnder Oberflächen aus deflektometrischen Messdaten. Universität Erlangen-Nürnberg, 2008

- **S. B. WERLING**. Deflektometrie zur automatischen Sichtprüfung und Rekonstruktion spiegelnder Oberflächen. Karlsruher Institut für Technik, 2011
- **S. SAVARESE et al.** Local Shape from Mirror Reflections. *International Journal of Computer Vision*, 2005, vol. 64 (1), 31-67